# EUROPÄISCHE PATENTSCHRIFT

(11) **EP 3 898 060 B1**
(45) Veröffentlichungstag und Bekanntmachung des Hinweises auf die Patenterteilung: **01.05.2024**
(21) Anmeldenummer: 19832825.4
(22) Anmeldetag: 19.12.2019
(51) Int. Cl.: B23K 26/03, B23K 26/38, B23K 26/60, B23K 26/70

(54) **VERFAHREN UND LASERFLACHBETTMASCHINE ZUM AUSSCHNEIDEN VON WERKSTÜCKEN**
METHOD AND LASER FLAT BED MACHINE FOR CUTTING OUT WORKPIECES
PROCÉDÉ ET MACHINE À LIT PLAT LASER POUR DÉCOUPER DES PIÈCES

(30) Priorität: 21.12.2018 DE 102018133524
(43) Veröffentlichungstag der Anmeldung: 27.10.2021
(73) Patentinhaber: TRUMPF Werkzeugmaschinen SE + Co. KG, 71254 Ditzingen (DE); Fraunhofer-Gesellschaft zur Förderung der angewandten Forschung e.V., 80686 München (DE)
(72) Erfinder: KIEFER, Manuel, 74889 Sinsheim (DE); POENITZ, Willi, 71229 Leonberg (DE); TESCHNER, Marc, 70176 Stuttgart (DE)
(74) Vertreter: Trumpf Patentabteilung
(86) Internationale Anmeldenummer: PCT/EP2019/086404
(87) Internationale Veröffentlichungsnummer: WO 2020/127797

(56) Entgegenhaltungen:
- EP-A1- 1 342 527
- DE-A1-102016 117 681
- DE-A1-102017 107 357
- DE-U1-202009 005 329
- JP-A- H11 320 143
- US-A1- 2011 316 977

## Beschreibung

Die vorliegende Erfindung betrifft ein Verfahren zum Bereitstellen von Tafelplanungsgeometriedaten, insbesondere zum Planen und Durchführen von Laserschneidvorgängen. Ferner betrifft die Erfindung eine Laserflachbettmaschine zum Ausschneiden von Werkstücken aus einem tafelförmigen Material mit einem Laserstrahl.

Mit einer Laserflachbettmaschine (auch als Laserschneidmaschine bezeichnet) können in einem Laserschneidvorgang Werkstücke z. B. aus einem Rohblech ausgeschnitten werden. Dabei wird ein Laserschneidstrahl gemäß einem Schneidplan über das Rohblech geführt. Der Schneidplan umfasst insbesondere den Weg des Laserschneidstrahls über das Rohblech. Der Weg wird in einer Planungsphase festgelegt und bestimmt eine zuvor geplante Anordnung von Werkstücken, wie sie aus dem Rohblech geschnitten werden sollen.

Vor Beginn eines Schneidvorgangs wird die Lage eines Rohblechs als Beispiel einer zu schneidenden Rohtafel mit dem Schneidplan abgeglichen. Eine Lagebestimmung des Rohblechs bezüglich des Maschinenkoordinatensystems kann dabei zur Hauptzeit durchgeführt werden, z. B. nach Ablegen der Blechtafel und kurz vor dem Schneidvorgang. Die Lagebestimmung kann auch entfallen, wenn die Lage des zu schneidenden Rohblechs durch feste Anschlagspositionen festgelegt wird.

JP 2013-039591 A offenbart die Verwendung einer Kamera zum Erkennen eines zu schneidenden Materials in einer Schneidregion mithilfe von Basispunkten, die in der Schneidregion vorgesehenen sind und in einem aufgenommenen Bild der Kamera erkannt werden können.

DE 10 2016 117681 A1 offenbart unter anderem einen Palettenwechsler, der es erlaubt, zwei von einem Grundgestell aufgenommene Paletten abwechselnd in eine Bearbeitungseinrichtung einzuführen, sodass ein auf der jeweiligen Palette aufliegendes plattenförmiges Material bearbeitet werden kann.

JP H11 320143 A und DE 20 2009 005329 U1 offenbaren die Verwendung einer Kamera zum Erzeugen einer Bildaufnahme einer Resttafel auf einem Schneidtisch zum Erstellen eines Schneidplans, welcher für die Durchführung eines Schneidvorgangs auf der Resttafel genutzt wird.

Einem Aspekt dieser Offenbarung liegt die Aufgabe zugrunde, eine Resttafel, insbesondere ein Restrohblech, für einen Schneidvorgang mit einer Laserschneidmaschine nutzbar zu machen. Insbesondere soll eine zeitlich effiziente Umsetzung von Mehrtafelbelegungen ermöglicht werden, um Nachproduktionen von z. B. kleinen Losgrößen in den Betrieb von Laserschneidmaschinen zu integrieren.

Zumindest eine dieser Aufgaben wird gelöst durch ein Verfahren zum Ausschneiden von Werkstücken aus einem tafelförmigen Material mit einem Laserstrahl einer Laserflachbettmaschine im Rahmen eines Schneidvorgangs nach Anspruch 1 und durch eine Laserflachbettmaschine nach Anspruch 8. Weiterbildungen sind in den Unteransprüchen angegeben.

In einigen Weiterbildungen des Verfahrens wird die Bildaufnahme hinsichtlich Kantenverläufen ausgewertet, wobei eine die Resttafelaußenkontur bestimmende Außenumfangskante und eine die Innenausschnittkontur begrenzende Innenumfangskante oder Innenumfangskantenabschnitte in der Bildaufnahme identifiziert und in den Tafelplanungsgeometriedaten als Außenumfangskantenlinie und Innenumfangskantenlinie abgelegt werden. Dabei begrenzt die Innenumfangskantenlinie einen Innenausschnittbereich der Resttafel.

In einigen Weiterbildungen des Verfahrens analysiert die Schwellenwert-Analyse Pixelwerte der Bildaufnahme hinsichtlich Öffnungen innerhalb der Resttafelaußenkontur. Die Schwellenwert-Analyse umfasst optional eine Blob-Analyse, die mindestens einen zusammenhängenden Pixelbereich ausgibt, dessen Grauwertverteilung in den Tafelplanungsgeometriedaten einem Innenausschnittbereich der Resttafel zugeordnet wird, der von einem zu planenden Schneidprozess ausgenommen wird.

In einigen Weiterbildungen umfasst das Verfahren ferner die Schritte: Berechnen einer Translations- und/oder Rotationstransformation der Resttafelaußenkontur zum Maschinen-Nullpunkt und Ausgeben der Translations- und Rotationstransformation als Teil der Tafelplanungsgeometriedaten.

In einigen Weiterbildungen des Verfahrens umfasst die Bildaufnahme eine Mehrzahl von Resttafeln, für die jeweils eine Restfläche abgeleitet und als Tafelplanungsgeometriedaten ausgegeben wird.

In einigen Weiterbildungen des Verfahrens werden die Schneidkonturen auf der durch die Tafelplanungsgeometriedaten bestimmten Restfläche
- manuell von einem Bediener bildbasiert oder
- mithilfe eines Schachtelungsverfahrens zum Anordnen von zweidimensionalen Räumen, die zu schneidenden Werkstückgeometrien zugeordnet sind, angeordnet.

In einigen Weiterbildungen der genannten Verfahren zum Ausschneiden von Werkstücken wird während mindestens eines der Schritte Absortieren des Schnittguts, Durchführen des Verfahrens zum Erstellen eines Schneidplans und Einlesen des Schneidplans eine weitere Tafel in die Tafelschneideinheit der Laserflachbettmaschine eingefahren und in einem Schneidvorgang in Werkstücke geschnitten.

In einem weiteren Aspekt wird eine Laserflachbettmaschine zum Ausschneiden von Werkstücken aus einem tafelförmigen Material mit einem Laserstrahl offenbart. Die Laserflachbettmaschine umfasst mindestens einen Palettenwechsler zum Bereitstellen eines Vorbereitungsbereichs einer Palette zur Lagerung des tafelförmigen Materials, eine Kamera zum Erzeugen einer Bildaufnahme der im Vorbereitungsbereich positionierten Palette mit dem tafelförmigen Material, eine Tafelschneideinheit und einer Steuerungseinheit zum Durchführen eines der wie hierin offenbarten Verfahren.

In einigen Weiterbildungen der Laserflachbettmaschine ist die Kamera an der Tafelschneideinheit angebracht und Bildaufnahmen der Kamera sind hinsichtlich eines Maschinenkoordinatensystems der Tafelschneideinheit räumlich kalibriert.

Die hierein beschriebenen Konzepte betreffen insbesondere das Ausschneiden von Werkstücken aus Rohmaterialtafeln aus einem Metall, wie z. B. Stahl, Aluminium oder Kupfer, oder einer Metalllegierung. Ebenso können auch Gläser, Funktionskeramiken, Kunststoffe, organische Werkstoffe oder andere Werkstoffe als Rohmaterial für Laserschneidvorgänge dienen.

Ein Vorteil der hierein beschriebenen Konzepte liegt darin, dass sie - im Unterschied zu konventionellen Messmethoden zur Blechlageerfassung - ohne spezifische Voraussetzungen für ein Erfassen und Ausrichten der Blechlage auskommen können. Insbesondere sind keine oder nicht zwingende Einschränkungen bei der Blechablage gegeben. So kann das Erfordernis von rechtwinkligen Außenkanten für die Nutzung von Anschlägen oder das erforderliche Anordnen eines Blechs in einem vorbestimmten Bereich (die sogenannte Beladeecke(n) einer Palette) entfallen.

Ferner werden die Blechdimensionen bei bekannten Laserschneidmaschinen außerhalb der Schneidzone, insbesondere im Bereich der Palette, nicht erfasst, sodass Restflächen auch für rechtwinklige Bleche nicht ermittelt werden können. Im Unterschied dazu erlauben die hierin beschriebenen Konzepte ein Erfassen von Restflächen, insbesondere von Restrohblechflächen, im Tafelvorbereitungsbereich der Laserschneidmaschine. Die Erfassung kann dabei ohne Marker und unabhängig von der Tafelgeometrie und der Lage/des Orts erfolgen.

Ferner wird es möglich zu prüfen, ob ein globales Schachtelmaß (SOLL-Fläche des Schachtelungsplans) eines Schneidvorgangs zur ermittelten Restfläche (zur Verfügung stehende IST-Fläche) passt. Ein möglicher Abgleich von SOLL-Fläche und IST-Fläche bietet Sicherheit und Komfort bei der Durchführung des Schneidvorgangs. So kann das Risiko für Prozessstörungen wie Kollisionen des Laserkopfes mit ausgeschnittenen Teilen, die aufgrund von Fehleinschätzung der Geometrie oder durch den Verzicht auf manuelle Messungen hervorgerufen werden können, vermindert werden.

Des Weiteren können Materialreserven bei der Planung der Anordnung von Schneidkonturen verkleinert werden oder sogar ganz entfallen, da eine Risikoreduzierung von einem Bediener nicht mehr vorgenommen werden muss. Entsprechend kann das Rohmaterial besser genutzt werden, die Materialeffizienz kann steigen und Prozessstörungen können reduziert werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Palette, die zum Einfahren in eine Laserflachbettmaschine bereitsteht und mit einer Resttafel beladen ist,
- Fig. 2: eine schematische Schnittansicht zur Verdeutlichung geometrischer Parameter zur Bildaufnahme der Palette mit einer an der Laserflachbettmaschine angebrachten Kamera,
- Fig. 3: eine schematische Darstellung einer Aufsicht auf die Palette mit der Resttafel aus Fig. 1,
- Fig. 4: eine schematische Darstellung von Tafelplanungsgeometriedaten, die der Geometrie der in Fig. 3 gezeigten Resttafel zugeordnet sind,
- Fig. 5A-5C: schematische Darstellungen zur Bestimmung von Innenausschnittbereichen und
- Fig. 6: ein Flussdiagram zur Verdeutlichung eines Verfahrens zum Ausschneiden von Werkstücken aus einem tafelförmigen Material.

Hierin beschriebene Aspekte basieren zum Teil auf der Erkenntnis, dass ein Bilderfassungssystem von Schnittgut, wie es z. B. beim Absortieren von Werkstücken mit einem optischen Assistenzsystem eingesetzt wird, auch für die Planung eines Schneidprozesses genutzt werden kann. Zur Unterstützung des Absortierens von Schnittgut werden Paletten mit einer oder mit mehreren Kameras außerhalb der Bearbeitungszone der Laserschneidmaschine überwacht. Hierin wird nun vorgeschlagen, Bildaufnahmen für die Bestimmung der Geometrie der Resttafel zu nutzen. Überdies wird vorgeschlagen, für eine Resttafel, die als nächstes in eine Bearbeitungszone eingeführt werden soll, vorhandene Innenausschnitte automatisch anhand des aufgenommenen Bildes zu erfassen.

Erfindungsgemäß wird ein Bild eines bereits bearbeiteten Rohblechs (als Beispiel für eine Resttafel) aufgenommen, wobei das Rohblech auf einer Palette außerhalb der Bearbeitungszone der Laserschneidmaschine zur Planung eines weiteren Schneidvorgangs bereitliegt. Aus dem bereits bearbeiteten Rohblech wurden schon ein oder mehrere ausgeschnitten Werkstücke absortiert, sodass das Rohblech in Form eines Restgitters mit entsprechenden Aussparungen/Löchern und einem beliebigem Außenkonturverlauf vorliegt. Das aufgenommene Bild kann dazu verwendet werden, eine Planung eines Schneidvorgangs auf dem Restgitter hauptzeitparallel, d. h. z. B. während eines zeitgleich in der Laserschneidmaschine ablaufenden Schneidvorgangs, vorzunehmen.

Hierfür wird die noch zur Verfügung stehende Restfläche des Restgitters mithilfe des aufgenommenen Bilds abgeleitet. Die abgeleitete Restfläche stellt einen zweidimensionalen Planungsraum dar. Bei der Planung des Schneidplans wird die für einen weiteren Schneidvorgang zur Verfügung stehende Restfläche mit zweidimensionalen Geometrien der Werkstücke, die aus der Resttafel geschnitten werden sollen, belegt. Hierzu kann ein Werker über eine Eingabeschnittstelle Werkstückgeometrien auf der Restfläche anordnen. Alternativ oder ergänzend kann im Planungsraum eine automatisierte Anordnung von Werkstücken auf der Restfläche erfolgen. Ein beispielhafter Schachtelungsalgorithmus für eine Automatisierung des Schachtelns ist in der deutschen Patentanmeldung DE 10 2018 126 077.6 der Anmelderin mit Anmeldetag 19. Oktober 2018 offenbart.

Indem die Außenkontur und die Innenkonturen erfasst werden, kann bei der Nachproduktion die Positionierung von Werkstückgeometrien auf die unbearbeitete Blechoberfläche beschränkt werden. So kann sichergestellt werden, dass Werkstücke nicht über bereits geschnittene Konturen geschachtelt werden.

Für die hierin vorgestellten Konzepte kann beispielsweise eine Bilderfassung mit einem Kamerasystem eingesetzt werden, wie es in der DE 10 2016 120 131 A1 für eine Unterstützung beim Absortieren von Werkstücken beschrieben wird.

Mit einem Bildverarbeitungsalgorithmus kann aus einer Bildaufnahme der Palette mit der Resttafel die aktuelle Lage der Resttafel auf der Palette sowie die Lage in Bezug zu einem Nullpunkt des Bezugssystems der Laserschneidmaschine bestimmt werden. Man bestimmt beispielsweise eine Rotation einer Resttafel oder eine Translation der Resttafel bezüglich eines Nullpunkts, der der Palette / dem Bezugssystem zugeordnet ist.

Im Speziellen wird hierin vorgeschlagen, mit einem Bildverarbeitungsalgorithmus zusätzlich zur Lage Innenausschnitte oder Blob-Bereiche, die in die Resttafel eingeschnitten wurden, zu erfassen. Die Innenausschnitte bestimmen wesentlich die für einen weiteren Laserschneidvorgang zur Verfügung stehende Restfläche. Mit der Kenntnis dieser Innenausschnittbereiche können weitere zu schneidende Werkstücke auf der Resttafel derart angeordnet werden, dass ein Überlapp der Werkstücke mit den Innenausschnittbereichen vermieden wird. So können auch kleine Restflächen für eine Nachproduktion von beispielsweise kleinen Losgrößen (geringen Stückzahlen) genutzt werden.

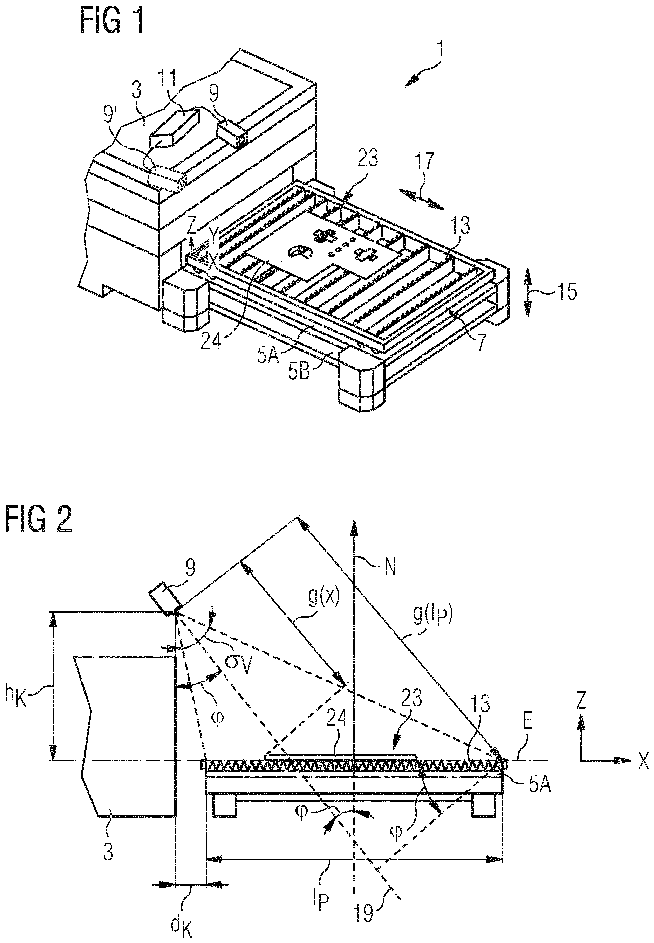

Fig. 1 zeigt eine Laserflachbettmaschine 1 mit einer Tafelschneideinheit 3, die den Maschinenbereich darstellt, in dem der Schneidvorgang durchgeführt wird.

Man erkennt ferner einen vorgelagerten Palettenwechsler, der es erlaubt, den Betrieb der Laserflachbettmaschine 1 mit mehreren Paletten durchzuführen. Beispielsweise stellt der Palettenwechsler zwei übereinander liegende Palettenpositionen 5A, 5B bereit. In Fig. 1 befindet sich eine Palette 7 in der oberen Palettenposition 5A, mit der eine Resttafel 23 für einen weiteren Schneidvorgang in die Tafelschneideinheit 3 eingefahren werden soll.

Zentral bezüglich des Palettenwechslers ist an der Tafelschneideinheit 3 eine Kamera 9 angebracht. Die Kamera 9 ermöglicht eine bildgebende Erfassung der Oberseite der in der oberen Palettenposition 5A befindlichen Palette 7 und erlaubt es so, ein Bild der Resttafel 23 aufzunehmen. Allgemein können mehrere Kameras eingesetzt werden. Beispielhaft ist eine zweite Kamera 9' gestrichelt in Fig. 1 seitlich oben an der der Tafelschneideinheit 3 angedeutet. Die Kameras 9, 9' senden Bilddaten an eine Steuerungseinheit 11 der Laserflachbettmaschine 1.

Die Palette 7 umfasst einen z. B. rechteckigen Palettenrahmen mit kurzen und langen Seitenabschnitten. Die Palette 7 umfasst ferner eine Anordnung von Auflagestegen 13. Die Auflagestege 13 sind am Palettenrahmen an den langen Seitenabschnitten befestigt und verlaufen entsprechend parallel zu den kurzen Seitenabschnitten. Auf den Auflagestegen 13 kann ein zu schneidendes Material abgelegt werden.

Für einen Laserschneidvorgang kann die Palette entlang einer Paletteneinfuhrrichtung 17 in die Tafelschneideinheit 3 hineingefahren werden. Die Palettenpositionen 5A, 5B können entlang der Palettenaustauschrichtung 15 verschoben werden, um die jeweils benötigte Palettenposition bezüglich der Tafelschneideinheit 3 zu positionieren. Für einen effizienten Betrieb der Laserflachbettmaschine 1 kann eine Palette in der Tafelschneideinheit 3 und eine vor der Tafelschneideinheit 3 positioniert werden. Der dargestellte Palettenwechsler erlaubt einen Betrieb der Laserflachbettmaschine 1 mit zwei Paletten von einer Seite. Alternativ können auf gegenüberliegenden Seiten der Tafelschneideinheit 3 je ein Palettenwechsler vorgesehen werden, sodass die Laserflachbettmaschine 1 von zwei Seiten betrieben werden kann. Für beispielhafte Ausgestaltungen von Palettenwechslern wird beispielhaft auf die DE 10 206 117 681 A1 verwiesen.

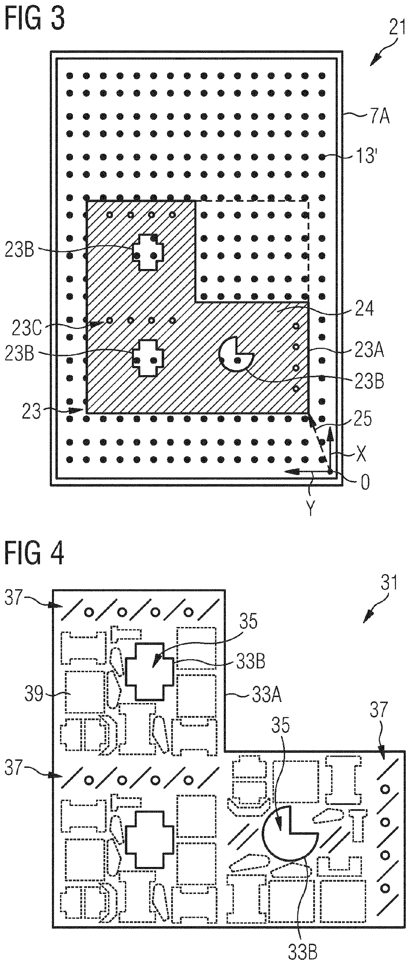

Die Kamera 9 wird gemäß den hierin offenbarten Konzepten für die Gewinnung von Tafelplanungsgeometriedaten (siehe Fig. 4) eingesetzt. Dazu wird eine Bildaufnahme 21 (siehe Fig. 3) der Resttafel 23 ausgewertet. Die Bildaufnahme 21 wird erfasst, wenn die Resttafel 23 auf der Palette 7 für einen nachfolgenden Schneidvorgang bereitsteht.

Fig. 2 verdeutlicht die verschiedenen geometrischen Parameter, die der Bildaufnahme 21 zugrunde liegen. So befindet sich die Kamera 9 in einer Höhe h_{K} in Z-Richtung über der Anordnung von Auflagestegen 13. Ferner ist eine Länge l_{P} der Palette 7 eingezeichnet, wobei sich ein Ende der Palette 7 in einem Abstand d_{K} in X-Richtung vor der Kamera 9 befindet. Der Palette 7 ist eine Normalenrichtung N zugeordnet und Auflageflächen der Auflagestege 13 bilden eine Ebene E, die sich in der X-Y-Ebene (z. B. Z=0) erstreckt.

Zum Erfassen der vollständigen Palette 7 benötigt die Kamera 9 einen Öffnungswinkel σv, wobei eine Aufnahmerichtung 19 zentral im Öffnungswinkel σv definiert ist. Die Aufnahmerichtung 19 verläuft unter einem Winkel ϕ zur Normalenrichtung N. Ein maximaler Palettenabstand g(lr) (gemessen parallel zur Aufnahmerichtung 19) sowie ein Abstand g(x) eines nächstliegenden Endes der Resttafel 23 sind ebenfalls angedeutet.

Basierend auf diesen geometrischen Bedingungen kann die Bildaufnahme 21 in ihrer Geometrie wie in Fig. 3 entzerrt werden. So kann die Position und Orientierung der Resttafel 23 über das Kamerasystem erfasst werden. Ist die Kamera 9 ferner auf ein Maschinenkoordinatensystem der Tafelschneideinheit 3 kalibriert (d. h., es ist eine Transformation von Bildkoordinaten in Maschinenkoordinaten gegeben), können die aufgenommenen Bilder und insbesondere die erfasste Resttafel 23 in Bezug zum Maschinenbezugssystem gesetzt werden.

Werden mehrere Kameras eingesetzt, können die Bilder zu einem zusammenhängenden Bild zusammengefügt werden.

In der in Fig. 3 gezeigten schematischen Bildaufnahme 21 der Palette 7 erkennt man einen rechteckigen Rahmen 7A, der die Palette 7 begrenzt, sowie die im Rahmen 7A gleichmäßig angeordneten Auflagebereiche 13' der Auflagestege 13.

Die Bildaufnahme 21 zeigt ferner eine Oberfläche 24 der Resttafel 23. Die Resttafel 23 hat eine Resttafelaußenkontur 23A in einer L-Form. Die Resttafel 23 weist als Beispiele für große Innenausschnitte drei Öffnungen auf, deren Innenausschnittkonturen 23B der Form von ausgeschnittenen Werkstücken entsprechen. Die Werkstücke wurden bereits von der Resttafel 23 entnommen. Ferner erkennt man Aufreihungen von jeweils vier kleineren Löchern 23C als Beispiele für kleine Innenausschnitte.

Zur Vollständigkeit ist ein Null-Punkt 0 eines Palettenkoordinatensystems auf der Bildaufnahme 21 eingezeichnet, das den Bezug der Palette zum Maschinenkoordinatensystem herstellt. Als Beispiel für eine Translations- und/oder Rotationstransformation, die hinsichtlich der Lage der Resttafel 23 für den Schneidvorgang zu berücksichtigen ist, verdeutlicht ein Pfeil 25 einen Verschiebungsvektor vom Null-Punkt 0 zu einer nächstliegenden Ecke der Resttafel 23.

Fig. 4 verdeutlicht den Inhalt von Tafelplanungsgeometriedaten 31. Die Tafelplanungsgeometriedaten 31 umfassen eine Außenumfangskantenlinie 33A der Resttafel 23 und mehrere Innenumfangskantenlinien 33B, die zu großen Innenausschnitten (Innenausschnittbereiche 35) gehören. Die Kantenlinien wurden z. B. mit Bildverarbeitungsalgorithmen der Kantendetektion erfasst.

Ferner umfassen die Tafelplanungsgeometriedaten 31 drei Kleinausschnittbereiche 37, die im Bereich der Löcher 23C definiert wurden, indem beispielsweise jeweils 4 Blobs grob zusammengefasst wurden.

Die Restfläche der Resttafel 23 wird durch der Bereich gebildet, der innerhalb der Außenumfangskantenlinie 33A, außerhalb der Innenumfangskantenlinien 33B sowie nicht im Bereich der Kleinausschnittbereiche 37 liegt. Die Restfläche steht noch für weitere auszuschneidende Werkstücke zur Verfügung.

Zur Verdeutlichung eines Schneidplans, wie er beispielsweise mit dem zuvor angesprochenen Schachtelungsalgorithmus erstellt werden kann, sind in Fig. 4 Schneidkonturen 39 für verschieden geformte Werkstücke gestrichelt angedeutet. Die Schneidkonturen 39 wurden derart auf der Restfläche verteilt, dass kein Überlapp mit der Außenumfangskantenlinie 33A, den Innenumfangskantenlinien 33B und den Kleinausschnittbereichen 37 vorliegt. Entsprechend können die erforderlichen Werkstücke vollständig aus der Resttafel 23 ausgeschnitten werden.

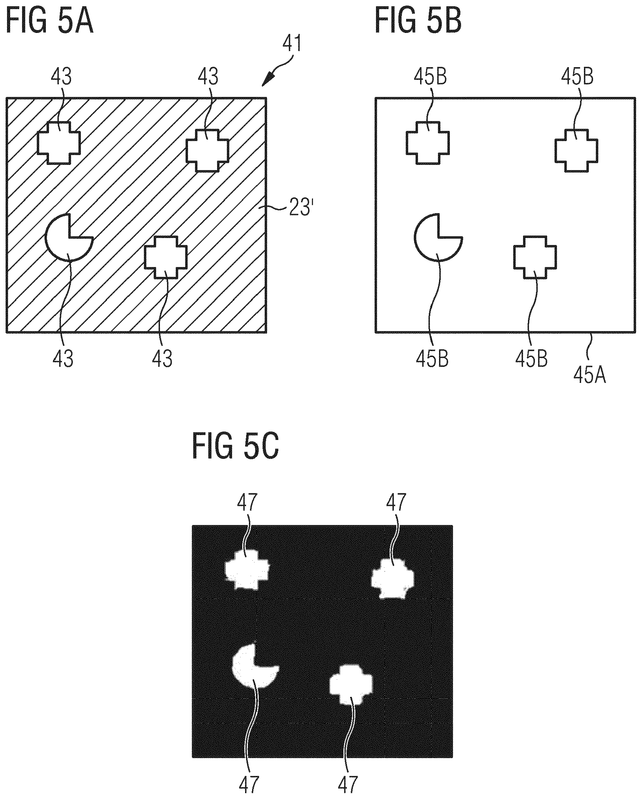

Die Figuren 5A bis 5C verdeutlichen Auswertungsverfahren der Bildaufnahmen der Kamera 9. Fig. 5A zeigt eine Bildaufnahme 41 einer Resttafel 23' mit vier Öffnungen 43, die durch das Ausschneiden von entsprechend geformten und bereits entnommenen Werkstücken entstanden sind.

In Fig. 5B werden eine Außenumfangskantenlinie 45A und vier Innenumfangskantenlinien 45B gezeigt, die mithilfe eines über die Bilddaten der Bildaufnahme laufenden Kantenalgorithmus gewonnen wurden. Dies setzt eine entsprechend kontraststarke Abbildung der Öffnungen 43 in der Bildaufnahme 41 voraus. Für die Detektion von Kanten großer Innenausschnitte sind verschiedenste Algorithmen einsetzbar, beispielsweise der sogenannte "Canny edge detector". Jedoch sind Kantenalgorithmen bei reflektierenden Oberflächen von Blechen nicht immer robust. Mit Blick auf die Resttafelform kann die Außenumfangskantenlinie auch von einer Rechteckform abweichen, da die Bildverarbeitungsalgorithmen auch nichtrechteckige Tafelgeometrien erfassen können.

Bei weniger kontraststarken Aufnahmen oder, falls nur kleine Öffnungen (Innenausschnitte) zu identifizieren sind, kann man eine Schwellenwert-Analyse der Bildaufnahme, insbesondere einen Blob-Algorithmus, auf das Bild anwenden. Unter einem Blob wird hierin ein Bereich in einem Bild verstanden, der sich nicht klar von der Umgebung abgrenzt und für den ein Kantenalgorithmus keine oder keine eindeutige Kantenlinie ausgibt. Blob-Algorithmen können bei Bildern mit binären Pixelwerten eingesetzt werden. Binäre Bilder können z. B. durch Schwellenwertbildung automatisch aus den Graustufenwerten der Pixel des Ursprungsbildes erzeugt werden. Blob-Bereiche stellen Bereich dar, die eine erhöhte Wahrscheinlichkeit aufweisen, dass dort bereits eine Laserbearbeitung erfolgt ist. Mit anderen Worten können Pixel, deren Grauwerte über, unter oder in der Bandbreite eines Schwellenwerts liegen, mittels einer Schwellenwertbildung binär mit "1" bewertet werden, wogegen alle anderen Pixel auf "0" gesetzt werden. Über weitere Parameter, wie z. B. die Anzahl zusammenhängender Pixel, eine minimale und maximale Flächengröße eines Blobs sowie mögliche Formen, werden zusammenhängende Pixel mit Wert "1" zu Blobs zusammengefasst.

Mit Blob-Algorithmen kann die Fläche der Ausschnitte im Blech oder die Blechoberfläche durch einen Grauwertunterschied in den Pixeln grob erfasst werden. Jedoch werden die Kanten durch Rauschen und den Schwellwert nicht unbedingt scharf dargestellt. Die Restfläche kann trotzdem näherungsweise erfasst werden, sodass Störbereiche wie z. B. Löcher im Blech erkannt und für die Nachfolgebearbeitung bei der Platzierung von in der Resttafel zu schneidenden Werkstücken ausgeschlossen werden können.

Fig. 5C zeigt schematisch Blob-Strukturen 47, wie sie mit einer Schwellenwert-Analyse der Bildaufnahme 41 für die Öffnungen 43 erzeugt werden können. Allgemein kann mit einer Blob-Analyse zwar keine exakte Aussage über die Konturform getroffen werden. Jedoch kann das Ausmaß der Öffnungen abgeschätzt werden und eine Positionierung von Teilen bei der Nachproduktion über Innenausschnitten kleinen Ausmaßes verhindert werden.

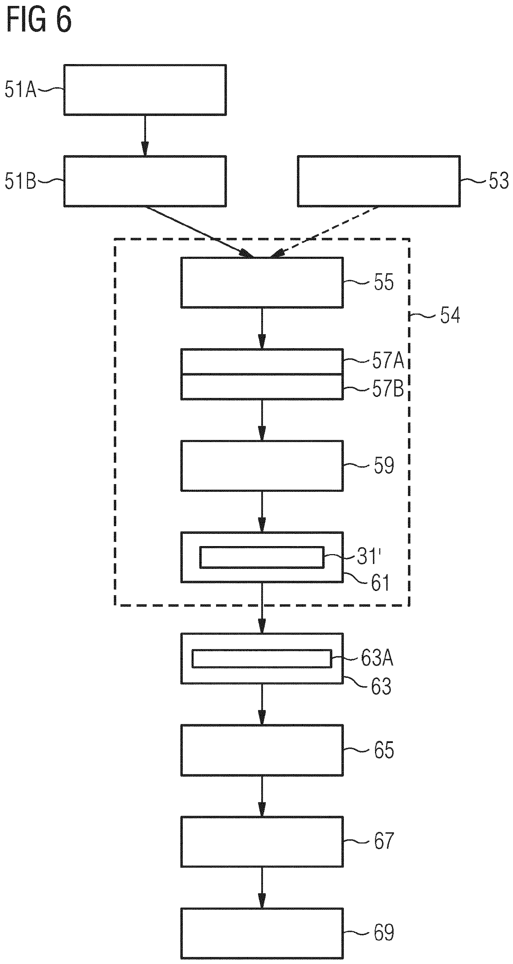

Fig. 6 verdeutlicht in einem Flussdiagramm verschiedene Aspekte, die einzeln oder in Gruppen in ein Verfahren zum Ausschneiden von Werkstücken aus einem tafelförmigen Material einfließen können. Dabei ist das tafelförmige Material eine sogenannte Resttafel eines zuvor durchgeführten Schneidprozesses und bildet keine durchgehende Fläche aus, sondern weist einen oder mehrere Innenausschnittbereiche auf. Eine Außenkontur der Resttafel kann, muss aber nicht, eine reguläre beispielsweise rechteckige Form aufweisen. Im Rahmen des zuvor durchgeführten Schneidprozesses kann eine ursprünglich rechteckige Tafel in beliebig geformte Resttafeln untergliedert worden sein, von denen eine oder mehrere als Resttafel in einem nachfolgenden Schneidvorgang für weitere Werkstücke genutzt werden sollen.

Fig. 6 fasst mehrere Verfahrensschritte eines Verfahrens 54 zum Bereitstellen von Tafelplanungsgeometriedaten 31' zusammen. Die Tafelplanungsgeometriedaten 31' sind für die Planung eines mit einer Laserflachbettmaschine durchzuführenden Laserschneidvorgangs vorgesehen. Gemäß dem Verfahren 54 wird in einem Schritt 55 eine Bildaufnahme einer Resttafel mit einer Kamera erzeugt. Die Resttafel weist bevorzugt keine weiteren abzusortierenden Werkstücke auf, d. h., das Schnittgut eines vorausgehenden Schneidvorgangs wurde entfernt (absortiert). In einem Schritt 57A wird die Bildaufnahme ausgewertet, um ein Außenmaß der Resttafel zu bestimmen. Dazu wird eine Resttafelaußenkontur der Resttafel bestimmt, wie z. B. in Zusammenhang mit Fig. 4B erläutert wurde.

Ferner wird die Bildaufnahme zum Bestimmen mindestens eines innerhalb der Resttafelaußenkontur liegenden Innenausschnittbereichs ausgewertet (Schritt 57B).

Ein großer Innenausschnittbereich kann recht genau in der Bildaufnahme erkannt werden. Dies kann beispielsweise durch die Identifikation einer geschlossenen Innenausschnittkontur mithilfe von Kantendetektionsalgorithmen erfolgen, wie sie zum Beispiel bereits für die Detektion der Resttafelaußenkontur auf die Bildaufnahme angewandt und in Zusammenhang mit Fig. 4B erläutert wurden.

Des Weiteren kann ein Innenausschnittbereich in der Bildaufnahme eventuell nur mit einer gewissen Unschärfe erkannt werden. Dies kann bei Innenausschnittbereichen eintreten, die aufgrund ihrer (geringen) Größe oder Form einer Kantendetektion nicht zugänglich sind. Beispielsweise können Innenausschnittbereiche mit Schwellenwert-Analysen der Bildaufnahme bestimmt werden, wie sie in Zusammenhang mit Fig. 4C erläutert wurden.

Unter Verwendung der bestimmten Resttafelaußenkontur und des bestimmten Innenausschnittbereichs wird im Schritt 59 einer Restfläche der Resttafel bestimmt. Die Restfläche stellt die Fläche der Resttafel dar, die einem Laserschneidvorgang zugrunde gelegt werden kann und aus der weitere Werkstücke geschnitten werden können.

Für die Planung, welche Werkstücke wie angeordnet aus der Resttafel geschnitten werden sollen, werden in einem Schritt 61 Tafelplanungsgeometriedaten 31' ausgegeben, die die Geometrie der Restfläche definieren. Die Tafelplanungsgeometriedaten 31' können ferner Translations- und/oder Rotationstransformation umfassen, die die Lage der Resttafelaußenkontur in einem Maschinenkoordinatensystem definieren.

Die ausgegebenen Tafelplanungsgeometriedaten 31' können in einem Verfahren zum Erstellen eines Schneidplans 63A für einen nachfolgenden Schneidvorgang verwendet werden. Dabei werden in einem Schritt 63 Schneidkonturen von Teilen auf der durch die Tafelplanungsgeometriedaten 31' bestimmten Restfläche angeordnet. Dies kann manuell von einem Bediener bildbasiert (z. B. mit Drop & Cut-Routinen) mithilfe eines kalibrierten Kamera-Livebilds oder mit einem Schachtelungsverfahren zum Anordnen von zweidimensionalen Räumen, die zu schneidenden Werkstückgeometrien zugeordnet sind, erfolgen.

Der Schneidplan 63A wird dann mit Positionsdaten der Schneidkonturen und optional den Tafelplanungsgeometriedaten und/oder den Daten der Translations- und/oder Rotationstransformation in einem Format erstellt, das von einer Steuerung einer Laserschneidmaschine eingelesen und zum entsprechenden Abfahren des Laserstrahls über die Resttafel genutzt wird.

Ergänzend wird für einen umfassenden Produktionsablauf erwähnt, dass ein Verfahren zum Ausschneiden von Werkstücken aus einem tafelförmigen Material mit einem Laserstrahl im Rahmen eines Folgeschneidvorgangs ferner folgende das Verfahren 54 einbindende Schritte aufweist.

Beispielsweise wird in einem Schritt 51A eine Palette aus einer Tafelschneideinheit einer Laserflachbettmaschine ausgegeben werden, wobei auf der Palette eine bearbeitete Tafel liegt. Die bearbeitete Tafel umfasst Schnittgut und eine das Schnittgut umgebende Resttafel. In einem Absortierschritt 51B wird das Schnittgut absortiert, sodass die Resttafel freigelegt wird. Die Resttafel liegt nun alleine (oder mit anderen Resttafeln) auf der Palette und wird für das Erzeugen einer Bildaufnahme entsprechend positioniert werden. Beispielsweise kann die Resttafel, insbesondere durch Verfahren der Palette, in einen Aufnahmebereich einer Kamera der Laserflachbettmaschine gebracht werden. Bei einer Belegung mit mehreren Resttafeln (Mehrtafelbearbeitung) kann eine Erfassen aller Resttafelflächen und deren Belegung mit auszuschneidenden Werkstücken gemeinsam erfolgen.

Nun erfolgt das bereits skizzierte Verfahren zum Erstellen eines Schneidplans 63A. Der Schneidplan 63A wird in einem Schritt 65 in eine Steuerungseinheit der Laserflachbettmaschine eingelesen und die Palette wird mit der Resttafel in einem Schritt 67 in die Tafelschneideinheit der Laserflachbettmaschine eingefahren. Nun wird in einem Schritt 69 ein Schneidvorgang entsprechend dem eingelesenen Schneidplan 63A auf der Resttafel durchgeführt werden.

Alternativ werden die Schritte 51A und 51B durch einen Schritt 53 ersetzt, in dem eine Resttafel auf einer Palette in einem Aufnahmebereich einer Kamera einer Laserflachbettmaschine bereitgestellt wird. Beispielsweise kann aus einem Vorhaltebereich von Restgittern eines für den nächsten Schneidvorgang ausgewählt werden.

Es wird angemerkt, dass eine weitere Tafel (Neutafel oder Resttafel) in die Tafelschneideinheit der Laserflachbettmaschine eingefahren und bearbeitet werden kann, während das Schnittgut absortiert wird, obiges Verfahren zum Erstellen eines Schneidplans durchgeführt wird, der erstellte Schneidplan eingelesen wird etc.

Zusammengefasst vereinfacht ein manuelles oder zeitnah automatisiertes Anordnen von zu schneidenden Teilen die Nachproduktion von kleinen Losgrößen. Hierfür wird eine kalibrierte Kamera benötigt, mit der zur Hauptzeit der Laserschneidmaschine ein Schneidprogramm auf Basis einer bereitgestellten Rohtafel/Resttafel manuell oder (teil-) automatisiert erstellt werden kann. Ein beim Absortieren verwendetes kalibriertes Kamera-Livebild kann hierzu genutzt werde. Bevorzugt liegt eine Rohtafel/Resttafel auf einer Palette nahe der Maschine bereit. Beispielsweise kann direkt nach dem Absortieren bei noch vorhandenem Restblech oder durch Auflegen von Rohtafel/Restgitter hauptzeitparallel ein Schneidprogramm aufgrund der Vermessung der Tafellage und Tafelfläche erfolgen. Dies kann zu einer Zeitersparnis von einigen Sekunden pro Tafel führen, wobei die Zeitersparnis mit Anzahl der nachschneidbaren Teile steigt.

Durch die kalibrierten Kameraaufnahmen können bei Verschiebungen der Resttafel auf der Palette, aber innerhalb des Sichtbereichs der Kamera, die detektierten Kanten nachgeführt werden. Auf Grund der Kalibrierung der Kamera/der Kameras kann ferner die Translation und Rotation der Resttafel zum Maschinen-Nullpunkt berechnet werden.

In einigen Ausführungsformen wird eine bildüberlagerte Darstellung der als nächstes zu schneidenden Tafel auf Basis einer Rohtafel auf der Palette angezeigt. So kann der Bediener einen visuellen Abgleich zur Dimension des Schneidprogramms und der Schachtelung auf der Tafel vornehmen. Besteht die Möglichkeit zu einer Vorschau auf das nächste Schneidprogramm, kann der Bediener zur Fehlervermeidung eingreifen und die Schneidpläne anpassen. Die hierin offenbarten Konzepte erlauben ferner eine Größenkontrolle, ob ein geplantes Schneidprogramm auf einer zu verwendenden Rohtafelfläche platziert werden kann.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen, im Rahmen der beigefügten Ansprüche. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum Ausschneiden von Werkstücken aus einem tafelförmigen Material mit einem Laserstrahl einer Laserflachbettmaschine (1) im Rahmen eines Schneidvorgangs, mit den Schritten:
Ausgeben (Schritt 51A) einer Palette (7) aus einer Tafelschneideinheit (3) der Laserflachbettmaschine (1), wobei auf der Palette (7) eine bearbeitete Tafel liegt, die Schnittgut und die das Schnittgut umgebende Resttafel (23) umfasst, und Absortieren (Schritt 51B) des Schnittguts, sodass die Resttafel (23) freigelegt wird und die Resttafel (23) auf der Palette (7) für das Erzeugen einer Bildaufnahme (21) angeordnet ist, wobei die Resttafel (23) in einem Aufnahmebereich der Kamera (9) bereitgestellt wird, oder alternativ Bereitstellen (Schritt 53) einer Resttafel (23) in einem Vorbereitungsbereich auf einer Palette (7), die einer Tafelschneideinheit (3) der Laserflachbettmaschine (1) zugeordnet ist, in einem Aufnahmebereich einer Kamera (9) der Laserflachbettmaschine (1),
Erzeugen (Schritt 55) einer Bildaufnahme (21) der Resttafel (23) mit der Kamera (9), wobei die Resttafel (23) von der Laserflachbettmaschine (1) bearbeitet wurde und Innenausschnittbereiche (25) aufweist, aus denen Schnittgut entfernt wurde,
Auswerten (Schritt 57A) der Bildaufnahme (21) zum Bestimmen einer Resttafelaußenkontur (23A) der Resttafel (23),
Auswerten (Schritt 57B) der Bildaufnahme (21) zum Bestimmen eines innerhalb der Resttafelaußenkontur (23A) liegenden Innenausschnittbereichs der Resttafel (23), wobei der Innenausschnittbereich durch eine in der Bildaufnahme identifizierte Innenausschnittkontur (23B) und/oder durch eine Schwellenwert-Analyse der Bildaufnahme bestimmt wird,
Ableiten (Schritt 59) einer Restfläche (24) der Resttafel (23) unter Verwendung der Resttafelaußenkontur (23A) und des Innenausschnittbereichs, wobei die Restfläche (24) einem Laserschneidvorgang zugrunde legbar ist, und
Ausgeben (Schritt 61) von Tafelplanungsgeometriedaten (31), die die Geometrie der Restfläche (24) definieren,
Anordnen (Schritt 63) von Schneidkonturen (39) auf der durch die Tafelplanungsgeometriedaten (31) bestimmten Restfläche (34) und
Erstellen des Schneidplans (63A) mit Positionsdaten der Schneidkonturen (39) und optional denTafelplanungsgeometriedaten und/oder Daten einer Translations- und/oder Rotationstransformation (25),
Einlesen (Schritt 65) des Schneidplans (63A) in eine Steuerungseinheit (11) der Laserflachbettmaschine (1),
Einfahren (Schritt 67) der Palette mit der Resttafel (23) in die Tafelschneideinheit (3) der Laserflachbettmaschine (1) und
Durchführen (Schritt 69) eines Schneidvorgangs entsprechend dem eingelesenen Schneidplan (63A) auf der Resttafel (23).

2. Verfahren (54) nach Anspruch 1, wobei die Bildaufnahme (21) hinsichtlich Kantenverläufen ausgewertet wird, wobei eine die Resttafelaußenkontur (23A) bestimmende Außenumfangskante und eine die Innenausschnittkontur (23B) begrenzende Innenumfangskante oder Innenumfangskantenabschnitte in der Bildaufnahme (21) identifiziert und in den Tafelplanungsgeometriedaten (31) als Außenumfangskantenlinie (33A) und Innenumfangskantenlinie (33B) abgelegt werden, wobei die Innenumfangskantenlinie (33B) einen Innenausschnittbereich (35) der Resttafel (23) begrenzt.

3. Verfahren (54) nach Anspruch 1 oder 2, wobei die Schwellenwert-Analyse Pixelwerte der Bildaufnahme (21) hinsichtlich Öffnungen (23C) innerhalb der Resttafelaußenkontur (23A) analysiert und optional eine Blob-Analyse umfasst, die mindestens einen zusammenhängenden Pixelbereich ausgibt, dessen Grauwertverteilung in den Tafelplanungsgeometriedaten (31) einem Innenausschnittbereich (35) der Resttafel (23) zugeordnet wird, der von einem zu planenden Schneidprozess ausgenommen wird.

4. Verfahren (54) nach einem der vorhergehenden Ansprüche, ferner mit:
Berechnen der Translations- und/oder Rotationstransformation (25) der Resttafelaußenkontur (23A) zum Maschinen-Nullpunkt und
Ausgeben der Translations- und Rotationstransformation (25) als Teil der Tafelplanungsgeometriedaten (31).

5. Verfahren (54) nach einem der vorhergehenden Ansprüche, wobei die Bildaufnahme (21) eine Mehrzahl von Resttafeln (23) umfasst, für die jeweils eine Restfläche (24) abgeleitet und als Tafelplanungsgeometriedaten (31) ausgegeben wird.

6. Verfahren nach einem der der vorhergehenden Ansprüche, wobei die Schneidkonturen (39) auf der durch die Tafelplanungsgeometriedaten (31) bestimmten Restfläche (34)
- manuell von einem Bediener bildbasiert oder
- mithilfe eines Schachtelungsverfahrens zum Anordnen von zweidimensionalen Räumen, die zu schneidenden Werkstückgeometrien zugeordnet sind,
angeordnet werden.

7. Verfahren nach einem der vorhergehenden Ansprüche, wobei während mindestens eines der Schritte Absortieren des Schnittguts, Durchführen des Verfahrens zum Erstellen eines Schneidplans (63A) und Einlesen des Schneidplans (63A) eine weitere Tafel in die Tafelschneideinheit (3) der Laserflachbettmaschine (1) eingefahren und in einem Schneidvorgang in Werkstücke geschnitten wird.

8. Laserflachbettmaschine (1) zum Ausschneiden von Werkstücken aus einem tafelförmigen Material mit einem Laserstrahl, wobei die Laserflachbettmaschine (1) umfasst:
mindestens einen Palettenwechsler (5A, 5B) zum Bereitstellen eines Vorbereitungsbereichs einer Palette (7) zur Lagerung des tafelförmigen Materials,
eine Kamera (9) zum Erzeugen einer Bildaufnahme (21) der im Vorbereitungsbereich positionierten Palette (7) mit dem tafelförmigen Material,
eine Tafelschneideinheit (3) und
eine Steuerungseinheit (11) zum Durchführen eines Verfahrens nach einem der vorhergehenden Ansprüche.

9. Laserflachbettmaschine nach Anspruch 8, wobei die Kamera (9) an der Tafelschneideinheit (3) angebracht ist und Bildaufnahmen (21) der Kamera (9) hinsichtlich eines Maschinenkoordinatensystems der Tafelschneideinheit (3) räumlich kalibriert sind.

## Claims

1. A method for cutting workpieces out of a panel-shaped material using a laser beam of a laser flatbed machine (1) in the context of a cutting process, the method comprising the steps of:
outputting (step 51A) a pallet (7) from a panel cutting unit (3) of the laser flatbed machine (1), wherein a processed panel containing the cut material and the remaining panel (23) surrounding the cut material lies on the pallet (7), and sorting out (step 51B) the cut material so that the remaining panel (23) is exposed and the remaining panel (23) is arranged on the pallet (7) for producing an image recording (21), wherein the remaining panel (23) is provided in a recording region of the camera (9), or alternatively
providing (step 53) a remaining panel (23) in a preparation region on a pallet (7) that is associated with a panel cutting unit (3) of the laser flatbed machine (1) in a recording region of a camera (9) of the laser flatbed machine (1),
producing (step 55) an image recording (21) of the remaining panel (23) using the camera (9), the remaining panel (23) having been processed by the laser flatbed machine (1) and having inner cutout regions (25) from which cut material was removed,
evaluating (step 57A) the image recording (21) in order to determine a remaining panel outer contour (23A) of the remaining panel (23),
evaluating (step 57B) the image recording (21) in order to determine an inner cutout region of the remaining panel (23), the inner cutout region lying inside of the remaining panel outer contour (23A) and being determined by an inner cutout contour (23B) identified in the image recording and/or by a threshold analysis of the image recording,
deriving (step 59) a remaining area (24) of the remaining panel (23) using the remaining panel outer contour (23A) and the inner cutout region, the remaining area (24) able to be used as the basis for a laser cutting process, and
outputting (step 61) panel planning geometric data (31) which define the geometry of the remaining area (24),
arranging (step 63) cutting contours (39) on the remaining area (34) determined by the panel planning geometric data (31) and
creating the cutting plan (63A) using position data of the cutting contours (39) and optionally using the panel planning geometric data and/or data of a translational and/or rotational transformation (25),
reading in (step 65) the cutting plan (63A) into a control unit (11) of the laser flatbed machine (1),
retracting (step 67) the pallet containing the remaining panel (23) into the panel cutting unit (3) of the laser flatbed machine (1) and
carrying out (step 69) a cutting process on the remaining panel (23) according to the read in cutting plan (63A).

2. The method (54) according to claim 1, wherein the image recording (21) is evaluated with regard to edge profiles, wherein an outer circumferential edge determining the remaining panel outer contour (23A) and an inner circumferential edge, or inner circumferential edge sections, delimiting the inner cutout contour (23B) are identified in the image recording (21) and stored in the panel planning geometric data (31) as an outer circumferential edge line (33A) and an inner circumferential edge line (33B), wherein the inner circumferential edge line (33B) delimits an inner cutout region (35) of the remaining panel (23).

3. The method (54) according to claim 1 or 2, wherein the threshold value analysis analyzes pixel values of the image recording (21) with respect to openings (23C) within the remaining panel outer contour (23A), and optionally includes a blob analysis which outputs at least one coherent pixel region, the grayscale value distribution of which in the panel planning geometric data (31) is assigned to an inner cutout region (35) of the remaining panel (23) which is excepted from a cutting process to be planned.

4. The method (54) according to one of the preceding claims, further comprising:
calculating the translational and/or rotational transformation (25) of the remaining panel outer contour (23A) relative to the machine zero point and
outputting the translational and rotational transformation (25) as part of the panel planning geometric data (31).

5. The method (54) according to one of the preceding claims, wherein the image recording (21) comprises a plurality of remaining panels (23), a remaining area (24) being derived for each of them and output as panel panning geometric data (31).

6. The method according to one of the preceding claims, wherein the cutting contours (39) are arranged on the remaining area (34) determined by the panel planning geometric data (31)
- manually by an operator based on the image or
- with the aid of a nesting method for arranging two-dimensional spaces that are associated with workpiece geometries to be cut.

7. The method according to one of the preceding claims, wherein as at least one of the steps of sorting out the cut material, carrying out the method for creating a cutting plan (63A) and reading in the cutting plan (63A) is being carried out, a further panel is retracted into the panel cutting unit (3) of the laser flatbed machine (1) and cut into workpieces in a cutting process.

8. A laser flatbed machine (1) for cutting workpieces out of a panel-shaped material using a laser beam, wherein the laser flatbed machine (1) comprises:
at least one pallet changer (5A, 5B) for providing a preparation region of a pallet (7) for storing the panel-shaped material,
a camera (9) for producing an image recording (21) of the pallet (7) positioned in the preparation region and containing the panel-shaped material,
a panel cutting unit (3) and
a control unit (11) for carrying out a method according to one of the preceding claims.

9. The laser flatbed machine according to claim 8, wherein the camera (9) is attached to the panel cutting unit (3) and image recordings (21) of the camera (9) are spatially calibrated with respect to a machine coordinate system of the panel cutting unit (3).

## Revendications

1. Procédé de découpe de pièces à partir d'un matériau en forme de panneau à l'aide d'un faisceau laser d'une machine laser à plat (1) dans le cadre d'une opération de découpe, comprenant comme étapes :
la sortie (étape 51A) d'une palette (7) d'une unité de découpe de panneaux (3) de la machine laser à plat (1), où sur la palette (7) se trouve un panneau usiné comprenant du matériau découpé et le panneau résiduel (23) entourant le matériau découpé, et l'absorption (étape 51B) du matériau découpé, de sorte que le panneau résiduel (23) soit exposé et que le panneau résiduel (23) soit disposé sur la palette (7) pour la production d'une prise de vue (21), où le panneau résiduel (23) est mis à disposition dans une zone de prise de vue de la caméra (9), ou à titre alternatif
la mise à disposition (étape 53) d'un panneau résiduel (23) dans une zone de préparation sur une palette (7) associée à une unité de découpe de panneaux (3) de la machine laser à plat (1), dans une zone de prise de vue d'une caméra (9) de la machine laser à plat (1),
la production (étape 55) d'une prise de vue (21) du panneau résiduel (23) à l'aide de la caméra (9), où le panneau résiduel (23) a été usiné par la machine laser à plat (1) et présente des zones de découpe intérieure (25) desquelles du matériau découpé a été retiré,
l'évaluation (étape 57A) de la prise de vue (21) afin de déterminer un contour extérieur de panneau résiduel (23A) du panneau résiduel (23),
l'évaluation (étape 57B) de la prise de vue (21) afin de déterminer une zone de découpe intérieure du panneau résiduel (23) située à l'intérieur du contour extérieur de panneau résiduel (23A), où la zone de découpe intérieure est déterminée par un contour de découpe intérieure (23B) identifié dans la prise de vue et/ou par une analyse de valeur seuil de la prise de vue,
la dérivation (étape 59) d'une surface résiduelle (24) du panneau résiduel (23) en utilisant le contour extérieur de panneau résiduel (23A) et la zone de découpe intérieure, où la surface résiduelle (24) peut servir de base à une opération de découpe au laser, et
la sortie (étape 61) de données géométriques du plan de panneau (31) définissant la géométrie de la surface résiduelle (24),
la disposition (étape 63) de contours de coupe (39) sur la surface résiduelle (34) déterminée par les données géométriques du plan de panneau (31) et
la création du plan de coupe (63A) avec des données de position des contours de coupe (39) et, en option, les données géométriques du plan de panneau et/ou des données d'une transformation de translation et/ou de rotation (25),
la lecture (étape 65) du plan de coupe (63A) dans une unité de commande (11) de la machine laser à plat (1),
l'introduction (étape 67) de la palette avec le panneau résiduel (23) dans l'unité de découpe de panneaux (3) de la machine laser à plat (1) et
l'exécution (étape 69) d'une opération de découpe conformément au plan de coupe (63A) lu sur le panneau résiduel (23).

2. Procédé (54) selon la revendication 1, où la prise de vue (21) est évaluée en ce qui concerne les tracés d'arêtes, où une arête périphérique extérieure déterminant le contour extérieur de panneau résiduel (23A) et une arête périphérique intérieure délimitant le contour de découpe intérieure (23B) ou des sections d'arête périphérique intérieure sont identifiées dans la prise de vue (21) et stockées dans les données géométriques du plan de panneau (31) comme ligne d'arête périphérique extérieure (33A) et ligne d'arête périphérique intérieure (338), où la ligne d'arête périphérique intérieure (33B) délimite une zone de découpe intérieure (35) du panneau résiduel (23).

3. Procédé (54) selon la revendication 1 ou 2, où l'analyse de valeur seuil analyse des valeurs de pixels de la prise de vue (21) en ce qui concerne des ouvertures (23C) à l'intérieur du contour extérieur de panneau résiduel (23A) et comprend en option une analyse de blob fournissant au moins une zone de pixels contigus dont la distribution des niveaux de gris dans les données géométriques du plan de panneau (31) est associée à une zone de découpe intérieure (35) du panneau résiduel (23) qui est exclue d'un processus de découpe à planifier.

4. Procédé (54) selon l'une des revendications précédentes, comprenant en outre :
le calcul de la transformation de translation et/ou de rotation (25) du contour extérieur de panneau résiduel (23A) par rapport au point zéro de la machine et
la sortie de la transformation de translation et de rotation (25) en tant que partie des données géométriques du plan de panneau (31).

5. Procédé (54) selon l'une des revendications précédentes, où la prise de vue (21) comprend une pluralité de panneaux résiduels (23) pour chacun desquels une surface résiduelle (24) est dérivée et délivrée en tant que données géométriques du plan de panneau (31).

6. Procédé selon l'une des revendications précédentes, où les contours de coupe (39) sont disposés sur la surface résiduelle (34) déterminée par les données géométriques du plan de panneau (31)
- manuellement par un opérateur sur la base d'une image ou
- à l'aide d'un procédé d'imbrication afin d'agencer des espaces bidimensionnels associés à des géométries de pièces à découper.

7. Procédé selon l'une des revendications précédentes, où, pendant au moins l'une des étapes d'absorption du matériau découpé, d'exécution du procédé de création d'un plan de coupe (63A) et de lecture du plan de coupe (63A), un autre panneau est introduit dans l'unité de découpe de panneaux (3) de la machine laser à plat (1) et est découpé en pièces lors d'une opération de découpe.

8. Machine laser à plat (1) pour la découpe de pièces à partir d'un matériau en forme de panneau à l'aide d'un faisceau laser, où la machine laser à plat (1) comprend :
au moins un échangeur de palettes (5A, 5B) pour la mise à disposition d'une zone de préparation d'une palette (7) pour le stockage du matériau en forme de panneau,
une caméra (9) pour la production d'une prise de vue (21) de la palette (7) positionnée dans la zone de préparation avec le matériau en forme de panneau,
une unité de découpe de panneaux (3) et
une unité de commande (11) pour l'exécution d'un procédé selon l'une des revendications précédentes.

9. Machine laser à plat selon la revendication 8, où la caméra (9) est montée sur l'unité de découpe de panneaux (3) et où des prises de vue (21) de la caméra (9) sont calibrées dans l'espace par rapport à un système de coordonnées de machine de l'unité de découpe de panneaux (3).
